# EUROPEAN PATENT SPECIFICATION

(11) **EP 4 019 807 B1**
(45) Date of publication and mention of the grant of the patent: **25.09.2024**
(21) Application number: 21203627.1
(22) Date of filing: 20.10.2021
(51) Int. Cl.: F16H 3/00

(54) **TRANSMISSION SYSTEM**
ÜBERTRAGUNGSSYSTEM
SYSTÈME DE TRANSMISSION

(30) Priority: 23.12.2020 IT 202000032087
(43) Date of publication of application: 29.06.2022
(73) Proprietor: Vhit S.P.A. Societa Unipersonale, 26010 Offanengo (IT)
(72) Inventor: Cadeddu, Leonardo, 26013 Crema (IT)
(74) Representative: Robba, Pierpaolo

(56) References cited:
- DE-B3- 102018 113 676
- GB-A- 2 037 382
- US-A1- 2012 277 060
- US-B2- 8 201 479

## Description

### Technical Field

The present invention relates in a general way to a transmission system capable of transferring a driving torque, particularly from a motor to a user element.

The present invention is particularly applicable to vehicles and other machines driven by electric motors.

### Prior Art

In the motor vehicle field, there are known transmission systems capable of transmitting the driving torque generated by the motor to the vehicle wheels, for the purpose of propulsion, and to various auxiliary components of the vehicle such as hydraulic pumps, cooling pumps, air conditioning compressors, etc., for the purpose of driving these elements.

In vehicles with internal combustion engines, the driving shaft, as is known, has a single direction of rotation. In such vehicles, the auxiliary components driven by the motor are therefore configured so that they also operate with a single direction of rotation, while suitable transmission components (usually called "reverse gear"), for reversing the rotary motion before transmitting it to the wheels, are required in order to transmit a reverse motion to the vehicle.

In vehicles with electric motors, however, it is possible to reverse the direction of rotation of the motor, and therefore of the driving shaft. In these vehicles, therefore, it is advantageous to attach the driving shaft directly to the system for transmitting the motion to the wheels, so that forward or reverse motion can be transmitted purely by varying the direction of rotation of the electric motor, without the need for the "reverse gear" components used in vehicles with internal combustion engines. However, since the auxiliary components must be driven at the same time, the problem arises of enabling them to be powered even when the electric motor reverses its direction of rotation to move the vehicle in reverse.

A possible solution to this problem is to use auxiliary components that can operate in both directions of rotation. In the case of pumps, this requires, for example, the reversal of the suction and delivery lines, provided that the pumping element, that is to say the rotor that sucks the fluid from the suction line and directs it into the delivery line, allows the reversal of motion. In most case, this solution is unfavourable in economic terms, since it requires the provision of more complex auxiliary components, to be provided specifically for electric motor vehicles. For example, in the case of pumps, reversing valves will have to be used for the suction and delivery channels.

Document US8201479B2 discloses a drive conversion mechanism including a rotatably mounted output shaft, a pair of output gears mounted on the output shaft so as to rotate independent of one another and relative to the output shaft and being displaced from each other axially along the output shaft, and a pair of one-way clutches arranged about the output shaft. Each clutch is connected to one of the output gears and extends about the output shaft in respective orientations that are the reverse of each other such that the one-way clutches can only drivingly engage the output shaft at alternate times, and thus not at the same time, so as to cause the output shaft to rotate in a same single direction as the output gears are driven in opposite directions relative to each other by an input train of constantly meshed input drive and idler gears.

Document DE102018113676B3 discloses a motor vehicle auxiliary unit arrangement, in which there are provided a motor vehicle auxiliary unit (22) with a transmission arrangement (16) is arranged in a drive train (2) of a motor vehicle, a transmission input member (14, 50), which is connected in terms of drive to the drive train (2), and at least one transmission output member (44, 60), which is connected in terms of drive to a rotary member (20) of the motor vehicle auxiliary unit (22). The transmission input member (14, 50) can be driven both in a first direction of rotation and in a second direction of rotation. The transmission arrangement (16) having a first freewheel arrangement (24, 52), (52) which, when the transmission input member (14, 50) rotate in a first direction, provides power transmission for driving the rotary member (20) in the second direction of rotation, and a second freewheel arrangement (62) which, when the transmission input member (14, 50) rotates in a second direction, transmits a force to drive the rotary member (20) in the second direction of rotation.

Consequently there is a need to enable auxiliary components similar to those used in internal combustion engine vehicles to be used in electric vehicles, thus benefiting from advantageous production costs due to the effects of scale, while also benefiting from the aforementioned advantage of having the electric motor attached directly to the system for transmitting motion to the vehicle wheels, without the need for appropriate reversing components. The aforesaid advantage relating to production costs is particularly evident in the case of electric vehicles developed from pre-existing vehicles with internal combustion engines.

The object of the present invention is to meet the aforesaid need by providing a mechanical transmission system capable of transferring a driving torque to auxiliary components of a vehicle.

This and other objects are achieved with the mechanical transmission system as claimed in the attached claims.

### Description of the Invention

The transmission system according to the present invention is a system configured for transmitting a driving torque from a driving wheel to a driven output wheel.

The transmission system comprises a first transmission stage of the freewheel type, comprising a first wheel engaged with the driving wheel, a second wheel, coaxial with said first wheel, and a first coupling mechanism between the first and the second wheel. This first coupling mechanism is configured for fixing the aforesaid first and second wheels to each other, creating what is known as the engaged state, when the first wheel rotates in a first direction of rotation (known as the engagement direction), and for disengaging the first wheel from the second wheel, creating what is known as the slip state, when the first wheel rotates in a second direction of rotation (opposed to the engagement direction).

According to the invention, the second wheel of the first transmission stage is engaged with the driven output wheel.

The transmission system further comprises an intermediate driven wheel, engaged with the driving wheel, and a second transmission stage of the freewheel type. This second transmission stage comprises a third wheel, engaged with the intermediate driven wheel, a fourth wheel, coaxial with said third wheel, and a second coupling mechanism between the third and the fourth wheel. This second coupling mechanism is configured for fixing the third and fourth wheels of the aforesaid second transmission stage to each other, creating what is known as the engaged state, when the third wheel of the second transmission stage rotates in a first direction of rotation (known as the engagement direction), and for disengaging the third wheel from the fourth wheel, creating what is known as the slip state, when the third wheel of the second transmission stage rotates in a second direction of rotation (opposed to the engagement direction).

According to the invention, the fourth wheel of the second transmission stage is engaged with the driven output wheel.

Additionally, the first direction of rotation (engagement direction) of the first transmission stage and the first direction of rotation (engagement direction) of the second transmission stage are coincident directions (both clockwise or both anticlockwise).

Because of the transmission system according to the invention, the rotation of the driving wheel in one direction or the opposite direction causes the driven output wheel to always rotate in the same direction. The transmission system therefore acts as an automatic rotation inverter, such that the incoming direction of rotation (of the driving wheel) is recognized and converted into an output direction of rotation (of the driven output wheel) which is predefined and unique.

The transmission system according to the invention is applicable to electric motor vehicles. In an electric motor vehicle comprising the transmission system according to the invention, the driving shaft of the electric motor may advantageously be attached directly to the components for transmitting motion to the vehicle wheels, so that the forward or reverse motion may be transmitted to the wheels simply by reversing the direction of rotation of the driving shaft. The driving wheel of the transmission system is also driven in rotation by the driving shaft of the electric motor, and at least one auxiliary user component of the vehicle is driven in rotation by the driven output wheel of the transmission system. Thus the auxiliary component is always made to rotate in the same direction of rotation, regardless of the direction of rotation of the electric motor.

The present invention is also applicable in fields other than that of motor vehicles, being applicable to all fields (the industrial machinery field, for example) in which user elements always have to be driven in the same direction of rotation, regardless of the direction of rotation of the electric motor powering them.

### Brief Description of the Figures

These and other characteristics and advantages of the present invention will be evident from the following description of preferred embodiments, provided by way of nonlimiting example with the aid of the appended figure, in which elements indicated by the same or a similar reference numeral indicate elements that have the same or a similar function and construction, and in which:

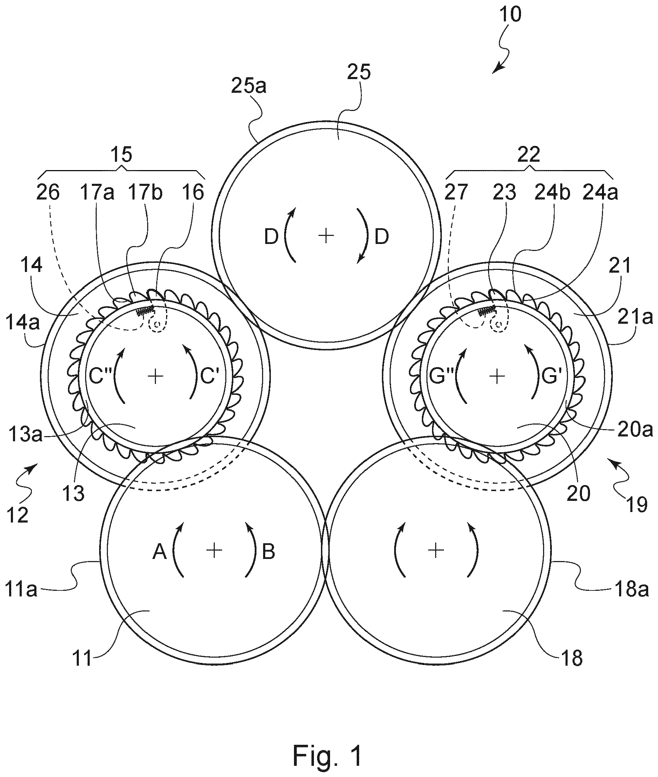

Fig. 1 shows a front view of a mechanical motion transmission system according to the present invention.

### Description of Preferred Embodiments

A mechanical transmission system 10 according to an embodiment of the present invention is described below with reference to Figure 1 .

The transmission system 10 is a gear mechanism capable of transferring a driving torque from a driving wheel 11 which, in turn, is driven, preferably, by a motor (not shown), such as an electric motor, to a driven output wheel 25 which, in turn, is capable of powering, preferably, one or more user components (not shown).

According to the invention, the transmission system 10 comprises a first transmission stage 12 of the freewheel (or overrun engagement) type, the operating principle of which is known.

This transmission stage 12 comprises a first wheel 13, engaged with the driving wheel 11, a second wheel 14, coaxial with the aforesaid first wheel 13, and a coupling mechanism 15 between the first wheel 13 and the second wheel 14. The coupling mechanism 15 is configured for fixing the first wheel 13 and the second wheel 14 to each other (in what is known as the engaged state) when the first wheel 13 rotates in a first direction of rotation C' (called the engagement direction), and for disengaging the first wheel 13 from the second wheel 14 (in what is known as the slip state) when the first wheel 13 rotates in a second direction of rotation C" (opposed to the engagement direction C').

According to the operating principle of the freewheel transmission, it should be noted, for the sake of completeness, that the aforementioned slip state is also present, as is known, when the first wheel 13 rotates in the first direction of rotation C' and the second wheel 14 also rotates in the first direction of rotation C', but more rapidly than the first.

In other words, the first freewheel transmission stage 12 is configured for transmitting the driving torque from the first wheel 13 to the second wheel 14 in the first direction of rotation C' (engagement direction), while it becomes disengaged if the direction of rotation of the first wheel 13 is reversed, or if the second wheel 14 starts to rotate in the first direction of rotation C' more rapidly than the first wheel 13.

The second wheel 14 of the first freewheel transmission stage 12 is engaged with the driven output wheel 25.

Consequently the driving torque is transmitted from the driving wheel 11 to the driven output wheel 25 through the first freewheel transmission stage 12 when the driving wheel 11 rotates in a direction A opposed to the engagement direction C' of the first transmission stage 12. Conversely, there is no transmission of the driving torque to the driven output wheel 25 through the first transmission stage 12 when the driving wheel 11 rotates in a direction B identical to the engagement direction C' of the first transmission stage 12.

It is also evident that the transmission of the driving torque from the driving wheel 11 to the driven output wheel 25 through the first transmission stage 12 causes a rotation of the driven output wheel 25 only in a direction of rotation D identical to the direction of rotation A of the driving wheel 11.

According to the invention, the transmission system 10 further comprises an intermediate driven wheel 18, engaged with the driving wheel 11, and a second transmission stage 19 of the freewheel (or overrun engagement) type, similar to the first transmission stage 12 described above. Therefore, the second transmission stage 19 also comprises a third wheel 20 and a fourth wheel 21, coaxial with the third wheel 20, and a second coupling mechanism 22 between the third wheel 20 and the fourth wheel 21.

The third wheel 20 of the second transmission stage 19 is engaged with the intermediate driven wheel 18, which therefore acts as an idle wheel; in other words it causes the third wheel 20 of the second transmission stage 19 to rotate in the opposite direction to the driving wheel 11.

Similarly to what has been illustrated for the first transmission stage 12, the second coupling mechanism 22 between the third wheel 20 and the fourth wheel 21 of the second transmission stage 19 is configured for fixing the third wheel 20 and the fourth wheel 21 to each other (in what is known as the engaged state) when the third wheel 20 rotates in a first direction of rotation G' (called the engagement direction), and for disengaging the third wheel 20 from the fourth wheel 21 (in what is known as the slip state) when the third wheel 20 rotates in a second direction of rotation G" (opposed to the engagement direction G').

In this case also, according to the operating principle of the freewheel transmission, it should be noted that the aforementioned slip state is also present, as is known, when the third wheel 20 rotates in the first direction of rotation G' and the fourth wheel 21 also rotates in the first direction of rotation G', but more rapidly than the first.

According to the invention, the first direction of rotation C' (that is to say the engagement direction) of the first transmission stage 12 and the first direction of rotation G' (that is to say the engagement direction) of the second transmission stage 19 are coincident directions; that is to say, they are both clockwise or both anticlockwise. With particular reference to the embodiment of Figure 1 , the aforesaid engagement directions C', G' are anticlockwise.

According to the invention, the fourth wheel 21 of the second freewheel transmission stage 19 is engaged with the driven output wheel 25.

Consequently, the driving torque is transmitted from the driving wheel 11 to the driven output wheel 25 through the intermediate driven wheel 18 and the second freewheel transmission stage 19 when the driving wheel 11 rotates in a direction B identical to the engagement direction G' of the second transmission stage 19. Conversely, there is no transmission of the driving torque to the driven output wheel 25 through the second transmission stage 19 when the driving wheel 11 rotates in a direction A opposed to the engagement direction G' of the second transmission stage 19.

It is also evident that the transmission of the driving torque from the driving wheel 11 to the driven output wheel 25 through the intermediate driven wheel 18 and the second transmission stage 19 causes a rotation of the driven output wheel 25 only in a direction of rotation D opposed to the direction of rotation B of the driving wheel 11.

Because of the transmission system 10 as a whole, therefore, the rotation of the driving wheel 11 in a direction A or in the opposite direction B causes the driven output wheel 25 to always rotate in the same direction D. This direction coincides with the direction of rotation A of the driving wheel 11 in the embodiment shown in Figure 1 , but could alternatively coincide with the direction of rotation B by reversing the engagement direction of both of the transmission stages 12 and 19.

According to the embodiment of the invention shown in Figure 1 , the coupling mechanisms 15 and 22 of the freewheel transmission stages 12 and 19 are what are known as shape coupling mechanisms, of a known type, each of which comprises a first and second pawl 16, 23, respectively, said first and second pawl being hinged on the first and third wheel 13, 20 of the transmission stage, respectively. This first and second pawl 16, 23 are configured for bearing against a first and second set of teeth 17a, 24a formed in the second and fourth wheel 14, 21, respectively, if the first and third wheel 13, 20 rotate in the engagement direction of rotation C', G' (in other words, in the anticlockwise direction, in the embodiment of Figure 1), so that the first and third wheel 13, 20 drive the second and fourth wheel 14, 21 in rotation, respectively. Conversely, if the first and third wheel 13, 20 rotate in the direction of rotation C", G", opposed to the engagement direction C', G', the first and second pawl 16, 23 slide over the first and second set of teeth 17a, 24a, respectively, and jumps from one tooth to another, so that the first and third wheel 13, 20 do not drive the second and fourth wheel 14, 12 in rotation, respectively, and the second and fourth wheel therefore remain idle. Additionally, a first and a second spring 26, 27 act on the first and second pawl 16, 23, respectively, so as to push the first and second pawl against the first and second set of teeth 17a, 24a, respectively, and then return the first and second pawls into the seats 17b, 24b between one tooth and another. Alternatively, the first and second pawls, instead of being hinged and impelled by a spring, are attached in a fixed manner to the first and third wheel 13, 20, respectively and are made of elastic material, so as to return automatically into the seats 17b, 24b between one tooth and another after sliding over a tooth 17a, 24a.

For the sake of completeness, it should be noted that the coupling mechanism 15, 22 described above also causes the pawls 16, 23 to slide and jump from one tooth to another when the first and third wheel 13, 20 rotate in the engagement direction C', G' and the second and fourth wheel 14, 21 rotate in the same direction of rotation C', G' more rapidly than the first and third wheel 13, 20.

According to further embodiments of the invention (not shown), the coupling mechanisms of the freewheel transmission stages may be constructed in other known ways. For example, coupling mechanisms known as friction couplings may be used. An example of such a coupling mechanism, which is known, is the cam-type freewheel, based on the use of contact bodies called cams, which, being positioned between an inner first wheel and an outer second wheel of the transmission stage, engage in suitable surfaces of the wheels, called tracks, in such a way that the frictional forces exchanged with them allow the relative motion of the two wheels in one direction and make them fixed in the other direction. A further example of a friction coupling mechanism is the roller freewheel, which uses rollers housed between an inner first wheel and an outer second wheel of the transmission stage. For each roller, the outer profile of the inner wheel has an ascending ramp. When the direction of rotation of the outer wheel lies in the ascending direction of the ramp, the rollers tend to move outwards, locking the outer wheel to the inner wheel by friction. In the opposite direction, the rollers are pressed into corresponding seats, and do not interfere with the relative motion of the two wheels.

The wheels 11, 13, 14, 18, 20, 21, 25 of the transmission system 10 are preferably gear wheels with external teeth 11a, 13a, 14a, 18a, 20a, 21a, 25a (shown purely schematically in the figures). In this case, the overall transmission ratio of the transmission system is defined by the ratio between the number of teeth of the driving wheel 11 and the number of teeth of the driven output wheel 25.

Alternatively, the wheels are non-toothed wheels (known as friction wheels), in which transmission takes place by the friction developed in the coupling.

The transmission system 10 according to the present invention acts as an automatic rotation inverter, such that the incoming direction of rotation A or B (of the driving wheel 11) is recognized and converted into an output direction of rotation D (of the driven output wheel 25) which is predefined and unique.

The transmission system 10 proposed by the present invention may therefore be advantageously used for transferring the driving torque generated by an electric motor to a user component, by driving the driving wheel 11 of the transmission system 10 by means of the driving shaft of the electric motor and powering the user component by means of the driven output wheel 25 of the transmission system 10, with the result that the user component is always driven in the same direction of rotation, regardless of the direction of rotation of the motor.

A particular application of the transmission system that has been described is therefore an application to electric motor vehicles, in which, because of this transmission system, the driving shaft of the electric motor may advantageously be attached directly to the components for transmitting motion to the vehicle wheels (so that the forward or reverse motion may be transmitted to the wheels simply by reversing the direction of rotation of the driving shaft), while the auxiliary components (such as hydraulic pumps, cooling pumps, air conditioning compressors, etc.) can be driven so that they always rotate in the same direction of rotation, independently of the direction of rotation of the electric motor.

Other examples of application may be provided, for example in the field of industrial machinery driven by electric motors.

Evidently, the transmission system as described is provided solely by way of nonlimiting example, and a variant of the transmission system having further intermediate driven wheels is possible without departure from the scope of protection of the inventions as defined in the claims.

## Claims

1. Transmission system for transmitting a driving torque from a driving wheel (11) to a driven output wheel (25),
wherein it comprises a first transmission stage (12) of the freewheel type, comprising a first wheel (13) engaged with the driving wheel (11), a second wheel (14) coaxial with said first wheel (13), and a first coupling mechanism (15) between the first wheel (13) and the second wheel (14) configured for fixing said first wheel (13) and second wheel (14) to each other when the first wheel (13) rotates in a first direction of rotation (C') and for disengaging the first wheel (13) from the second wheel (14) when the first wheel (13) rotates in a second direction of rotation (C"), wherein said second wheel (14) of the first transmission stage (12) is engaged with the driven output wheel (25),
and wherein it comprises an intermediate driven wheel (18), engaged with the driving wheel (11), and a second transmission stage (19) of the freewheel type, comprising a third wheel (20) engaged with the intermediate driven wheel (18), a fourth wheel (21) coaxial with said third wheel (20), and a second coupling mechanism (22) between the third wheel (20) and the fourth wheel (21) configured for fixing the third wheel (20) and the fourth wheel (21) to each other when the third wheel (20) rotates in a first direction of rotation (G') and for disengaging the third wheel (20) from the fourth wheel (21) when the third wheel (20) rotates in a second direction of rotation (G"), wherein said fourth wheel (21) of the second transmission stage (19) is engaged with the driven output wheel (25), and wherein the first direction of rotation (C') of the first transmission stage (12) and the first direction of rotation (G') of the second transmission stage (19) are coincident directions.

2. Transmission system according to Claim 1, wherein the first coupling mechanism (15) of the first transmission stage (12) and the second coupling mechanism (22) of the second transmission stage (19) comprise a first pawl (16) and a second pawl (23), respectively, the first pawl (16) being mounted on the first wheel (13) of the first transmission stage (12) and the second pawl (23) being mounted on the third wheel (20) of the second transmission stage (19), wherein the first coupling mechanism (15) and the second coupling mechanism (22) further comprise a first set of teeth (17a) and a second set of teeth (24a), respectively, the first set of teeth (17a) being formed in the second wheel (14) of the first transmission stage (12) and the second set of teeth (24a) being formed in the fourth wheel (21) of the second transmission stage (19), wherein said first and second pawl (16, 23) are configured for bearing against said first and second set of teeth (17a, 24a), respectively, if the first wheel (13) and the third wheel (20) rotate in the first direction of rotation (C', G'), so that the first wheel (13) and the third wheel (20) drive the second wheel (14) and the fourth wheel (21) in rotation, respectively, and for sliding over the first and second set of teeth (17a, 24a) and jumping from one tooth to another if the first wheel (13) and the third wheel (20) rotate in the second direction of rotation (C", G"), so that the first wheel (13) and the third wheel (20) do not drive the second wheel (14) and the fourth wheel (21) in rotation, respectively.

3. Transmission system according to Claim 2, wherein said first and second pawl (16, 23) are pivoted on the first and third wheel (13, 20), respectively, and wherein the first coupling mechanisms (15) of the first transmission stage (12) and the second coupling mechanism (22) of the second transmission stage (19) comprise a first spring (26) and a second spring (27), respectively, said first and second spring (26, 27) being capable of acting on the first and second pawl (16, 23) mounted on the first and third wheel (13, 20) so as to push them against the first and second set of teeth (17a, 24a) formed in the second and fourth wheel (14, 21), respectively.

4. Transmission system according to Claim 2, wherein the first and second pawl are attached in a fixed way to the first and third wheel (13, 20), respectively, and consist of an elastic material, so that said first and second pawl automatically press against the first and second set of teeth (17a, 24a) formed in the second and fourth wheel (14, 21), respectively.

5. Transmission system according to Claim 1, wherein the coupling mechanisms of the first transmission stage (12) and of the second transmission stage (19) are friction coupling mechanisms.

6. Transmission system according to Claim 5, wherein the coupling mechanisms of the first transmission stage (12) and of the second transmission stage (19) are cam or roller coupling mechanisms.

7. Vehicle comprising an electric motor having a driving shaft attached directly to elements for transmitting motion to the wheels of the vehicle, **characterized in that** it comprises a transmission system (10) according to any of Claims 1 to 6, wherein the driving wheel (11) of the transmission system (10) is driven in rotation by the driving shaft of the electric motor, and wherein at least one auxiliary user component of the vehicle is driven in rotation by the driven output wheel (25) of the transmission system (10).

## Patentansprüche

1. Getriebesystem zur Übertragung eines Antriebsmoments von einem Antriebsrad (11) auf ein angetriebenes Abtriebsrad (25),
wobei es eine erste Getriebestufe (12) von der Art eines Freilaufs umfasst, die ein erstes Rad (13), das mit dem Antriebsrad (11) in Eingriff ist, ein zweites Rad (14), das koaxial zu dem ersten Rad (13) ist und einen ersten Kopplungsmechanismus (15) zwischen dem ersten Rad (13) und dem zweiten Rad (14), der ausgebildet ist, um das erste Rad (13) und das zweite Rad (14) aneinander zu koppeln, wenn sich das erste Rad (13) in einer ersten Drehrichtung (C') dreht, und um das erste Rad (13) von dem zweiten Rad (14) zu lösen, wenn sich das erste Rad (13) in einer zweiten Drehrichtung (C") dreht, wobei das zweite Rad (14) der ersten Getriebestufe (12) mit dem angetriebenen Abtriebsrad (25) in Eingriff ist,
und wobei es ein zwischengeschaltetes angetriebenes Rad (18), das mit dem Antriebsrad (11) in Eingriff ist, und eine zweite Getriebestufe (19) von der Art eines Freilaufs umfasst, die ein drittes Rad (20), das mit dem zwischengeschalteten angetriebenen Rad (18) in Eingriff ist, ein viertes Rad (21), das koaxial zu dem dritten Rad (20) ist, umfasst und einen zweiten Kopplungsmechanismus (22) zwischen dem dritten Rad (20) und dem vierten Rad (21), der ausgebildet ist, um das dritte Rad (20) und das vierte Rad (21) aneinander zu koppeln, wenn sich das dritte Rad (20) in einer ersten Drehrichtung (G') dreht, und um das dritte Rad (20) von dem vierten Rad (21) zu lösen, wenn sich das dritte Rad (20) in einer zweiten Drehrichtung (G") dreht, wobei das vierte Rad (21) der zweiten Getriebestufe (19) mit dem angetriebenen Abtriebsrad (25) in Eingriff ist, und wobei die erste Drehrichtung (C') der ersten Getriebestufe (12) und die erste Drehrichtung (G') der zweiten Getriebestufe (19) zusammenfallende Richtungen sind.

2. Getriebesystem nach Anspruch 1, wobei der erste Kopplungsmechanismus (15) der ersten Getriebestufe (12) und der zweite Kopplungsmechanismus (22) der zweiten Getriebestufe (19) eine erste Sperrklinke (16) bzw. eine zweite Sperrklinke (23) umfassen, wobei die erste Sperrklinke (16) am ersten Rad (13) der ersten Getriebestufe (12) und die zweite Sperrklinke (23) am dritten Rad (20) der zweiten Getriebestufe (19) montiert ist, wobei der erste Kopplungsmechanismus (15) und der zweite Kopplungsmechanismus (22) ferner einen ersten Satz Zähne (17a) bzw. einen zweiten Satz Zähne (24a) umfassen, wobei der erste Satz Zähne (17a) in dem zweiten Rad (14) der ersten Getriebestufe (12) gebildet ist und der zweite Satz Zähne (24a) in dem vierten Rad (21) der zweiten Getriebestufe (19) gebildet ist, wobei die erste und zweite Sperrklinke (16, 23) ausgebildet sind, um an dem ersten bzw. zweiten Satz Zähne (17a, 24a) anzuliegen, wenn sich das erste Rad (13) und das dritte Rad (20) in der ersten Drehrichtung (C', G') drehen, so dass das erste Rad (13) und das dritte Rad (20) das zweite Rad (14) und das vierte Rad (21) in Drehung versetzen, bzw. zum Gleiten über den ersten und den zweiten Satz Zähne (17a, 24a) und zum Springen von einem Zahn zum anderen, wenn sich das erste Rad (13) und das dritte Rad (20) in der zweiten Drehrichtung (C", G") dreht, so dass das erste Rad (13) und das dritte Rad (20) das zweite Rad (14) bzw. das vierte Rad (21) nicht in Drehung versetzen.

3. Getriebesystem nach Anspruch 2, wobei die erste und zweite Sperrklinke (16, 23) an dem ersten bzw. dritten Rad (13, 20) drehbar gelagert sind, und wobei der erste Kopplungsmechanismus (15) der ersten Getriebestufe (12) und der zweite Kopplungsmechanismus (22) der zweiten Getriebestufe (19) eine erste Feder (26) bzw. eine zweite Feder (27) umfassen, wobei die erste und die zweite Feder (26, 27) in der Lage sind, auf die erste und die zweite Sperrklinke (16, 23) einzuwirken, die auf dem ersten und dem dritten Rad (13, 20) so angebracht sind, um sie gegen den ersten und den zweiten Satz Zähne (17a, 24a) zu drücken, die in dem zweiten bzw. vierten Rad (14, 21) gebildet sind.

4. Getriebesystem nach Anspruch 2, wobei die erste und die zweite Sperrklinke fest an dem ersten bzw. dritten Rad (13, 20) angebracht sind und aus einem elastischen Material bestehen, so dass die erste und die zweite Sperrklinke automatisch gegen den ersten und den zweiten Satz Zähne (17a, 24a) drücken, die im zweiten bzw. vierten Rad (14, 21) gebildet sind.

5. Getriebesystem nach Anspruch 1, wobei die Kopplungsmechanismen der ersten Getriebestufe (12) und der zweiten Getriebestufe (19) Reibungskopplungsmechanismen sind.

6. Getriebesystem nach Anspruch 5, wobei die Kopplungsmechanismen der ersten Getriebestufe (12) und der zweiten Getriebestufe (19) Nocken- oder Rollenkopplungsmechanismen sind.

7. Fahrzeug, das einen Elektromotor mit einer Antriebswelle umfasst, die direkt an den Elementen zur Übertragung der Bewegung auf die Räder des Fahrzeugs angebracht ist, **dadurch gekennzeichnet, dass** es ein Getriebesystem (10) nach einem der Ansprüche 1 bis 6 umfasst, wobei das Antriebsrad (11) des Getriebesystems (10) durch die Antriebswelle des Elektromotors in Drehung versetzt wird und wobei mindestens eine Hilfsbenutzerkomponente des Fahrzeugs durch das angetriebene Abtriebsrad (25) des Getriebesystems (10) in Drehung versetzt wird.

## Revendications

1. Système de transmission pour transmettre un couple d'entraînement d'une roue menante (11) à une roue de sortie menée (25),
dans lequel il comprend un premier étage de transmission (12) du type roue libre, comprenant une première roue (13) engagée avec la roue menante (11), une deuxième roue (14) coaxiale avec ladite première roue (13), et un premier mécanisme de couplage (15) entre la première roue (13) et la deuxième roue (14) configuré pour fixer ladite première roue (13) et ladite deuxième roue (14) l'une à l'autre lorsque la première roue (13) tourne dans un premier sens de rotation (C') et pour désengager la première roue (13) de la deuxième roue (14) lorsque la première roue (13) tourne dans un deuxième sens de rotation (C''), dans lequel ladite deuxième roue (14) du premier étage de transmission (12) est engagée avec la roue de sortie menée (25),
et dans lequel il comprend une roue menée intermédiaire (18), engagée avec la roue menante (11), et un deuxième étage de transmission (19) du type roue libre, comprenant une troisième roue (20) engagée avec la roue menée intermédiaire (18), une quatrième roue (21) coaxiale avec ladite troisième roue (20), et un deuxième mécanisme de couplage (22) entre la troisième roue (20) et la quatrième roue (21) configuré pour fixer la troisième roue (20) et la quatrième roue (20) l'une à l'autre lorsque la troisième roue (20) tourne dans un premier sens de rotation (G') et pour désengager la troisième roue (20) de la quatrième roue (21) lorsque la troisième roue (20) tourne dans un deuxième sens de rotation (G"), dans lequel la quatrième roue (21) du deuxième étage de transmission (19) est engagée avec la roue de sortie menée (25), et dans lequel le premier sens de rotation (C') du premier étage de transmission (12) et le premier sens de rotation (G') du deuxième étage de transmission (19) sont des sens coïncidents.

2. Système de transmission selon la revendication 1, dans lequel le premier mécanisme de couplage (15) du premier étage de transmission (12) et le deuxième mécanisme de couplage (22) du deuxième étage de transmission (19) comprennent un premier cliquet (16) et un deuxième cliquet (23), respectivement, le premier cliquet (16) étant monté sur la première roue (13) du premier étage de transmission (12) et le deuxième cliquet (23) étant monté sur la troisième roue (20) du deuxième étage de transmission (19), dans lequel le premier mécanisme de couplage (15) et le deuxième mécanisme de couplage (22) comprennent en outre un premier jeu de dents (17a) et un deuxième jeu de dents (24a), respectivement, le premier jeu de dents (17a) étant formées dans la deuxième roue (14) du premier étage de transmission (12) et le deuxième jeu de dents (24a) étant formées dans la quatrième roue (21) du deuxième étage de transmission (19), dans lequel ledit premier et ledit deuxième cliquet (16, 23) sont configurés pour s'appuyer contre ledit premier et ledit deuxième jeu de dents (17a, 24a), respectivement, si la première roue (13) et la troisième roue (20) tournent dans le premier sens de rotation (C', G'), de sorte que la première roue (13) et la troisième roue (20) entraînent la deuxième roue (14) et la quatrième roue (21) en rotation, respectivement, et pour coulisser sur les premier et deuxième jeux de dents (17a, 24a) et sauter d'une dent à l'autre si la première roue (13) et la troisième roue (20) tournent dans le deuxième sens de rotation (C", G"), de sorte que la première roue (13) et la troisième roue (20) n'entraînent pas la deuxième roue (14) et la quatrième roue (21) en rotation, respectivement.

3. Système de transmission selon la revendication 2, dans lequel lesdits premier et deuxième cliquets (16, 23) sont pivotés sur les première et troisième roues (13, 20), respectivement, et dans lequel les premiers mécanismes de couplage (15) du premier étage de transmission (12) et le deuxième mécanisme de couplage (22) du deuxième étage de transmission (19) comprennent un premier ressort (26) et un deuxième ressort (27), respectivement, lesdits premier et deuxième ressorts (26, 27) pouvant agir sur les premier et deuxième cliquets (16, 23) montés sur les première et troisième roues (13, 20) de façon à les pousser contre les premier et deuxième jeux de dents (17a, 24a) formées dans les deuxième et quatrième roues (14, 21), respectivement.

4. Système de transmission selon la revendication 2, dans lequel les premier et deuxième cliquets sont attachés de manière fixe aux première et troisième roues (13, 20), respectivement, et sont constitués d'un matériau élastique, de sorte que lesdits premier et deuxième cliquets s'appuient automatiquement contre les premier et deuxième jeux de dents (17a, 24a) formées dans les deuxième et quatrième roues (14, 21), respectivement.

5. Système de transmission selon la revendication 1, dans lequel les mécanismes de couplage du premier étage de transmission (12) et du deuxième étage de transmission (19) sont des mécanismes de couplage par frottement.

6. Système de transmission selon la revendication 5, dans lequel les mécanismes de couplage du premier étage de transmission (12) et du deuxième étage de transmission (19) sont des mécanismes de couplage à cames ou à rouleaux.

7. Véhicule comprenant un moteur électrique ayant un arbre d'entraînement directement attaché à des éléments de transmission de mouvement aux roues du véhicule, **caractérisé en ce qu'**il comprend un système de transmission (10) selon l'une quelconque des revendications 1 à 6, dans lequel la roue menante (11) du système de transmission (10) est entraînée en rotation par l'arbre d'entraînement du moteur électrique, et dans lequel au moins un composant utilisateur auxiliaire du véhicule est entraîné en rotation par la roue de sortie menée (25) du système de transmission (10).
